# EUROPEAN PATENT APPLICATION

(11) **EP 4 545 462 A1**
(43) Date of publication of application: **30.04.2025**
(21) Application number: 23826977.3
(22) Date of filing: 06.06.2023
(51) Int. Cl.: B65H 75/14, B29B 11/16, B65H 54/00, B65H 75/18, C08J 5/24

(54) **YARN PREPREG PACKAGE PRODUCTION METHOD AND REEL FOR YARN PREPREG**

(30) Priority: 22.06.2022 JP 2022100249
(71) Applicant: TMT Machinery, Inc., Osaka-shi, Osaka 541-0041 (JP)
(72) Inventor: INOUE, Takehisa, Kyoto-shi Kyoto 612-8686 (JP)
(74) Representative: Ter Meer Steinmeister & Partner
(86) International application number: PCT/JP2023/021070
(87) International publication number: WO 2023/248790

(57) **Abstract**

A yarn prepreg package is formed by winding yarn prepreg (5) onto a reel (40). The reel (40) has two guides (43, 44) spaced apart (g1). Each of the guides (43, 44) has a first flange (51), and a flange-like second flange (52) being opaque. The second flange (52) is located on an outside from the first flange (51) in an axial direction. The second flange (52) has a higher thermal conductivity than that of the first flange (51). The first flange (51) is exposed axially outward through a remaining amount check hole (55) formed in a through shape at the second flange (52). The yarn prepreg (5) is led between the guides (43, 44) of both sides and wound spirally onto the reel (40) in a single row.

## Description

### TECHNICAL FIELD

The present invention relates to a reel configuration for winding yarn prepreg.

### BACKGROUND ART

Prepreg is fibers made of carbon or other material impregnated with a liquid resin. Yarn prepreg is prepreg in which the fiber base material is in the form of yarn. Yarn prepreg using carbon fibers is used, for example, as an intermediate material for manufacturing CFRP. CFRP is an abbreviation for Carbon Fiber Reinforced Plastics.

PTL 1 discloses a package of thermoset tow prepreg wound on a bobbin. PTL 1 proposes a configuration in which the tow prepreg has a powder loading of 1.25 mg/cm² or less on the surface and the traverse angle range of the tow prepreg is 20° or less. PTL 1 also describes a case in which the tow prepreg is wound around a bobbin with flanges so that the traverse angle is 0°. The bobbin with flanges is a type of reel.

### PRIOR-ART DOCUMENTS

### PATENT DOCUMENTS

PTL 1: Japanese Patent Application Laid-Open No. 9-169861 (1997)

### SUMMARY OF THE INVENTION

### PROBLEMS TO BE SOLVED BY THE INVENTION

Compared with winding around a flange-less bobbin, winding around a reel is superior in unwinding the yarn, and reduces friction and bending during unwinding, thus reducing damage to the yarn. In addition, the reel winding can shorten the release distance compared to the package winding, which makes it easier to downsize the post-process equipment (for example, CFRP manufacturing equipment).

When the reel winding is performed, the reel guides the yarn prepreg by means of the flanges to achieve a predetermined winding shape of the yarn prepreg. The flange of the reel stabilizes the winding shape of the yarn prepreg and protects the wound yarn prepreg from external contact. In addition, the flange of the reel has the function of making the remaining amount of yarn prepreg visible from the outside during unwinding the yarn prepreg.

In the process of manufacturing yarn prepreg using carbon fiber, the yarn prepreg is subjected to high temperatures in order to impart fluidity to the resin. In addition, the yarn prepreg is wound by a winder with appropriate tension applied to form a reel package. Therefore, when the yarn prepreg is wound onto a member in the winder, deformation of the member due to heat and pressure and other effects on the above functions can be problematic.

The present invention was made in view of the above circumstances, and its purpose is to stabilize the shape of a package wound with high-temperature yarn prepreg and to facilitate handling of the package after winding.

### MEANS FOR SOLVING THE PROBLEMS AND EFFECTS THEREOF

The problem to be solved by the present invention is as described above, and next, means for solving the problem and effects thereof will be described.

According to the first aspect of the present invention, the following yarn prepreg package manufacturing method is provided. That is, in this manufacturing method, yarn prepreg is wound onto a reel to form a yarn prepreg package. The reel includes two guides which are arranged so that a spacing is formed between the two guides. At least one of the guides includes a first member and a second member, the second member being opaque and formed in a flange shape. The second member is located on an outside in an axial direction from the first member. The second member has a higher thermal conductivity than a thermal conductivity of the first member. The yarn prepreg is led between the two guides to be wound spirally in a single row onto the reel.

This allows for good suppression of thermal deformation of the guide guiding the yarn prepreg and for stable maintenance of the parallelism of the two guides. Therefore, it is possible to produce a yarn prepreg package in which the yarn prepreg is neatly wound and to ensure good unwinding of the yarn prepreg from the package.

In the yarn prepreg package manufacturing method described above, the following is preferred. That is, the first member is transparent or translucent. The first member is exposed outward in the axial direction through a hole or notch formed in a through shape at the second member.

This allows the remaining amount of the yarn prepreg to be easily checked via the through-shaped hole or notch formed at the second member.

In the yarn prepreg package manufacturing method described above, it is preferred that a thermal expansion of the second member is lower than a thermal expansion of the first member.

This allows for even better suppression of thermal deformation of the guide.

In the yarn prepreg package manufacturing method described above, it is preferred that the second member has higher rigidity than rigidity of the first member.

This allows the second member to strongly suppress the attempt of the first member to deform outward in the axial direction due to heat.

In the yarn prepreg package manufacturing method described above, it is preferred that the first member has a lower relative density than a relative density of the second member.

This allows the reel and package to be lightweight while suppressing deformation of the guide, which facilitates transportation and other handling.

In the yarn prepreg package manufacturing method described above, the first member and the second member can be configured to be coupled to each other via an adhesive layer.

In this case, the rigidity of the guide can be well increased.

In the yarn prepreg package manufacturing method described above, the first member and the second member can be configured to be in contact with each other face to face without being adhered.

In this case, the deformation of the first member can be released without being transmitted to the second member. In other words, even if the first member is deformed, the second member does not follow and deform. Thus, it is advantageous against thermal deformation.

In the yarn prepreg package manufacturing method described above, an air layer can be configured to be formed between the first member and the second member.

In this case, heat is less likely to be transferred from the first member to the second member, which effectively prevents thermal deformation of the second member.

In the yarn prepreg package manufacturing method described above, it is preferred that an outer diameter of the second member is larger than an outer diameter of the first member.

This makes it easier to prevent the peripheral edge of the first member from deforming to overcome the second member outward in the axial direction, even if the first member is largely deformed.

In the yarn prepreg package manufacturing method described above, the following is preferred. That is, the reel includes a core and its outer circumference is wound by the yarn prepreg. At least one of the two guides is removable from the core.

This allows easy access to the yarn prepreg wound onto the reel. In addition, the reel is easy to maintain.

According to the second aspect of the present invention, a yarn prepreg reel with the following configuration is provided. That is, the reel is a reel for winding yarn prepreg. The reel includes two guides which are arranged so that a spacing is formed between the two guides. At least one the guide has a first member which is transparent or translucent and a second member which is opaque and formed in a flange shape. The second member is located on an outside in an axial direction from the first member. The first member is exposed outward in an axial direction through a hole or notch formed in a through shape at the second member. An air layer is formed between the first member and the second member.

This allows good suppression of thermal deformation of the guide guiding the yarn prepreg and stable maintenance of the parallelism of the two guides. In particular, heat is less likely to be transferred from the first member to the second member, so that thermal deformation is less likely to occur in the second member. Therefore, it is possible to produce a yarn prepreg package in which the yarn prepreg is neatly wound and to ensure good unwinding of the yarn prepreg from the package.

In the yarn prepreg reel described above, it is preferred that a thermal expansion of the second member is lower than a thermal expansion of the first member.

This allows for even better suppression of thermal deformation of the guide.

In the yarn prepreg reel as described above, it is preferred that the second member has more rigidity than rigidity of the first member.

This allows the second member to strongly suppress the attempt of the first member to deform outward in the axial direction due to heat.

In the yarn prepreg reel described above, it is preferred that the first member has a lower relative density than a relative density of the second member.

This allows the reel to be lightweight of the reel while suppressing deformation of the guide, which facilitates transportation and other handling.

It is preferable that the yarn prepreg reel is configured as follows. That is, the yarn prepreg reel includes a core whose outer circumference is wound by the yarn prepreg. At least one of the two guides is removable from the core.

This allows easy access to the yarn prepreg wound onto the reel. In addition, the reel is easy to maintain.

### BRIEF DESCRIPTION OF THE DRAWINGS

FIG. 1 is a schematic diagram showing an overall configuration of a yarn prepreg manufacturing machine.
FIG. 2 is a partial cross-sectional diagonal view showing yarn prepreg being wound on a reel.
FIG. 3 is a schematic cross-sectional view showing a comparative example.
FIG. 4 is a schematic cross-sectional view showing a first example of a reel of this embodiment.
FIG. 5 is a schematic cross-sectional view showing a second example of a reel of this embodiment.
FIG. 6 is a schematic cross-sectional view showing a modification of the second example.
FIG. 7 is a schematic cross-sectional view showing a third example of a reel of this embodiment.
FIG. 8 is a schematic diagram showing a reel of another example that is used in the yarn prepreg manufacturing machine.
FIG. 9 is a partial cross-sectional diagonal view showing yarn prepreg being wound on the reel of another example.
FIG. 10 is a schematic cross-sectional view showing the reel of another example.

### EMBODIMENT FOR CARRYING OUT THE INVENTION

First, a manufacturing method for manufacturing a yarn prepreg package will be described.

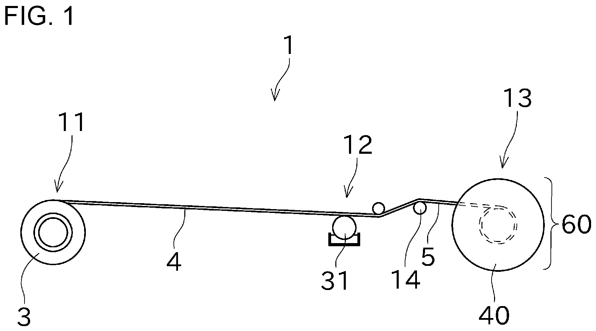

FIG. 1 shows a yarn prepreg manufacturing machine 1. This yarn prepreg manufacturing machine 1 is capable of manufacturing yarn prepreg 5 and winding the yarn prepreg 5 on a reel 40 to manufacture a yarn prepreg package 60.

The yarn prepreg manufacturing machine 1 has a carbon fiber supplier 11, a resin applier 12, and a winder 13.

The carbon fiber supplier 11 can be set with a carbon fiber supply bobbin 3. Carbon fibers 4 released from the carbon fiber supply bobbin 3 travel downstream toward the winder 13.

The resin applier 12 has rollers 31 that can rotate while immersed in the resin. The resin applier 12 has a heating device (not shown) for heating the resin, which causes the resin to become liquid. The roller 31 contacts the carbon fibers 4 to adhere the resin to the surface of the carbon fibers 4.

The winder 13 can be set with the reel 40 for winding the yarn prepreg 5. The winder 13 drives the reel 40 by means of an electric motor, for example. This allows the reel 40 to wind the yarn prepreg 5.

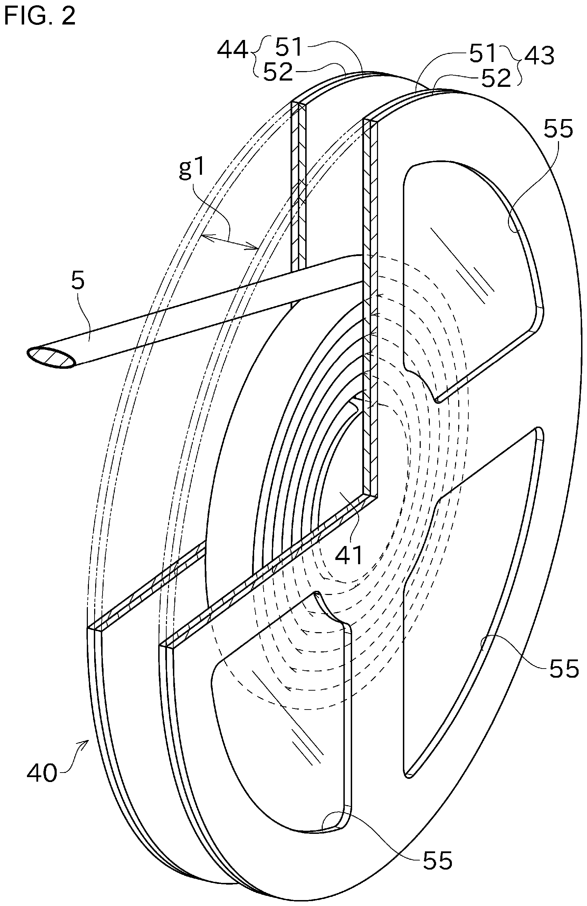

As shown in FIG. 2, the reel 40 has a core 41, a first guide 43, and a second guide 44.

The core 41 is formed, for example, in a cylindrical shape. The yarn prepreg 5 can be wound onto the outer circumference of the core 41.

The first guide 43 is fixed to one end of the core 41 in the axial direction. The second guide 44 is fixed to one end of the core 41 on the opposite side of the first guide 43 in the axial direction. Each of the first guide 43 and the second guide 44 is formed in a flange shape. The first guide 43 and the second guide 44 guide the yarn prepreg 5 so that the yarn prepreg 5 is wound at an appropriate position on the outer circumference of the core 41.

An axial gap is formed between the first guide 43 and the second guide 44. The spacing g1 of this gap is the size of a small margin added to the width of the yarn prepreg 5 which is formed in a flattened shape. The size of the gap g1 is smaller than twice the width of the yarn prepreg 5. By guiding the yarn prepreg 5 between the first guide 43 and the second guide 44, the yarn prepreg 5 can be neatly spirally wound in a single row centered on the core 41.

The first guide 43 and the second guide 44 are each removable from the core 41. The configuration for removably securing the first guide 43 and the second guide 44 to the core 41 can be realized, for example, by using bolts and nuts not shown. This makes it easy to manually adjust the yarn prepreg 5, even if the winding of the yarn prepreg 5 is disrupted. In addition, the first guide 43 and the second guide 44 are easier to clean and otherwise maintain. Only one of the first guide 43 and the second guide 44 may be removable from the core 41.

The first guide 43 and the second guide 44 are symmetrically configured and substantially similar. Accordingly, the configuration of the first guide 43 will be described below as representative. In the following description, the side of the reel 40 in the axial direction that is closer to the portion where the yarn prepreg 5 is wound onto the core 41 may be referred to as the inside in the axial direction, and the side that is farther away may be referred to as the outside in the axial direction.

The first guide 43 has a first flange (first member) 51 and a second flange (second member) 52.

The first flange 51 is a plate-shaped member formed in the shape of a flange. The thickness direction of the first flange 51 is parallel to the axial direction of the core 41. The first flange 51 is formed by a transparent synthetic resin. The material of the first flange 51 is preferably a filler-filled resin. However, the material of the first flange 51 can also be, for example, polycarbonate, polytetrafluoroethylene, polyethylene terephthalate, glass, or polyvinyl chloride.

The second flange 52 is a plate-shaped member formed in the shape of a flange. The thickness direction of the second flange 52 is parallel to the axial direction of the core 41. The second flange 52 is located on the outside in the axial direction from the first flange 51. The second flange 52 is arranged parallel to the first flange 51. The second flange 52 is opaque. The material of the second flange 52 is preferably a metal, for example, aluminum. However, the material of the second flange 52 can also be, for example, iron, stainless steel, or the like.

At an appropriate location in the second flange 52, a remaining amount check hole 55 is formed through the second flange 52 in the thickness direction. The remaining amount check hole 55 can be formed, for example, as a hole formed in the shape of a circular sector centered around the center of rotation of the reel 40. The first flange 51 is exposed to the outside through this remaining amount check hole 55. Thus, the amount of the yarn prepreg 5 wound around the reel 40 can be easily checked from the side of the reel 40. Instead of the hole, a notch may be formed in the second flange 52 for checking the remaining amount. The notch can, for example, be formed elongated in the radial direction, extending from the outer edge of the second flange 52 toward the center of rotation.

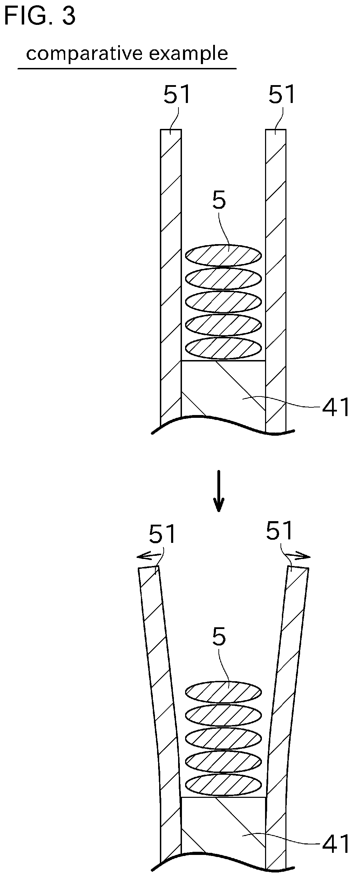

As shown in the comparative example in FIG. 3, consider the case where, hypothetically, both the first guide 43 and the second guide 44 only comprise the first flanges 51 which are transparent. The yarn prepreg 5, which is wound onto the core 41 in a hot condition, contacts or is in close proximity to the first flange 51, thus heating a surface of the inside of the first flange 51 in the axial direction. Since the thermal conductivity of the first flange 51 is not relatively high, a temperature gradient in the thickness direction is created within the material of the first flange 51, which is higher on the inside in the axial direction and lower as it approaches the outer side.

The portion of the inside of the first flange 51 in the axial direction is hotter and therefore expands more in the radial direction. The portion of the outside of the first flange 51 in the axial direction is cooler and therefore expands less in the radial direction. As a result, the heat from the yarn prepreg 5 causes the first flange 51 to deform in such a way that it becomes axially outward as it approaches outward in the radial direction. If the first flange 51 is deformed in this manner, it is unable to guide the yarn prepreg 5 properly, so that, for example, it is wound around the reel 40 in such a way that it deviates from the yarn prepreg 5 already wound spirally in a single row. As a result, abrasion may occur during winding or unwinding of the yarn prepreg 5, causing it to break, etc.

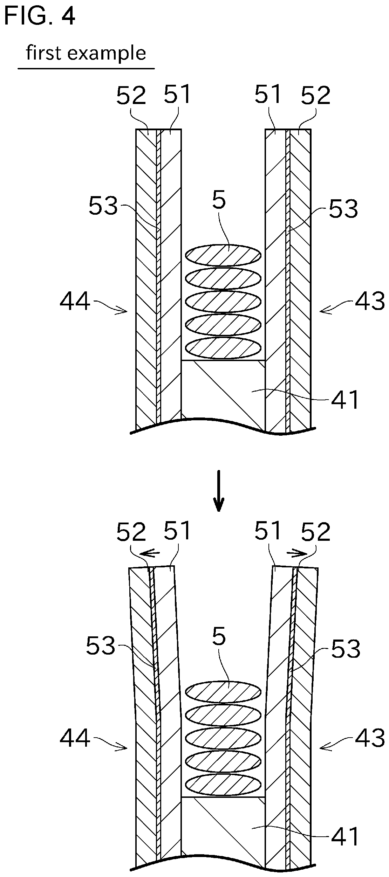

Therefore, as shown in FIG. 4, the second flange 52 in this embodiment is provided on the outside from the first flange 51 in the axial direction. The second flange 52 has a lower thermal expansion than a thermal expansion of the first flange 51. In other words, the coefficient of a linear expansion of the second flange 52 is smaller than that of the first flange 51. Furthermore, the second flange 52 has a higher thermal conductivity than a thermal conductivity of the first flange 51, so the temperature gradient as described for the first flange 51 is less likely to occur. As a result, the second flange 52 does not deform as much as the first flange 51.

The second flange 52 is positioned on the outside from the first flange 51 in the axial direction. Therefore, even if the radially outer portion of the first flange 51 tries to deform axially outward, the deformation is restrained by the second flange 52. Therefore, the deformation of the first guide 43 as a whole can also be reduced.

**In** the example of FIG. 4, the first flange 51 and the second flange 52 are bonded to each other by a suitable adhesive. Although omitted in FIG. 2, FIG. 4 shows an adhesive layer 53. This adhesive layer 53 mechanically couples the first flange 51 and the second flange 52 to each other. Thus, the second flange 52 is able to better restrain the deformation of the first flange 51.

However, if the first flange 51 and the second flange 52, which have different thermal expansions, are mechanically coupled by a surface, a large force may be applied to the coupled portion as a result of thermal deformation, which may cause damage. **In** addition, if strong deformation of the first flange 51 occurs, the second flange 52 may be deformed together with the first flange 51. Considering this, the first flange 51 and the second flange 52 can be configured not to be bonded together.

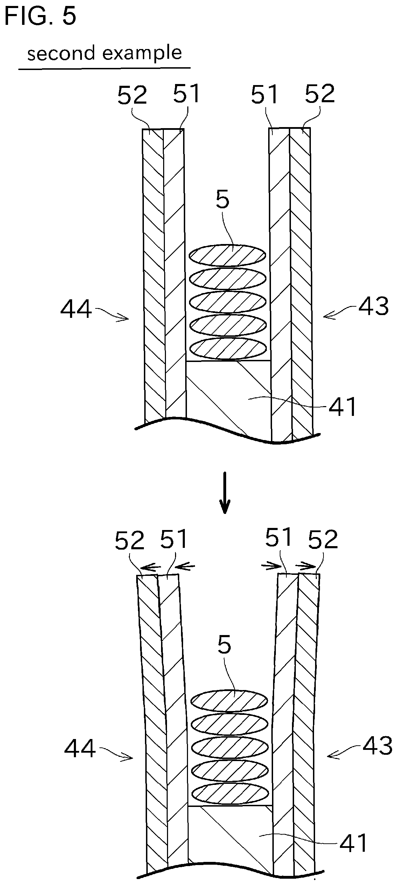

For example, as shown in FIG. 5, consider a configuration in which the first flange 51 and the second flange 52 are not bonded and are simply in contact with each other surface to surface. **In** this configuration, even if the first flange 51 is deformed so that it becomes outward in the axial direction as it approaches outward in the radial direction as a result of heat applied to it from the yarn prepreg 5, this deformation is suppressed by the second flange 52, which is relatively less deformed due to heat. Since the first flange 51 is not mechanically coupled to the second flange 52, the surfaces can slide against each other and allow the deformation of the first flange 51 to escape radially outward.

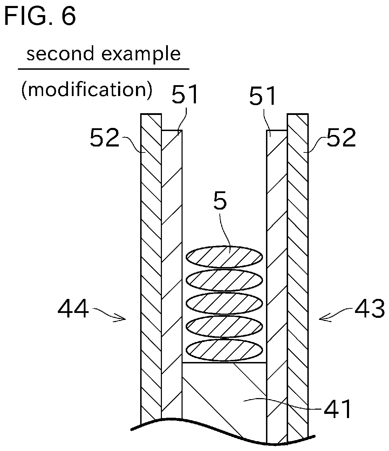

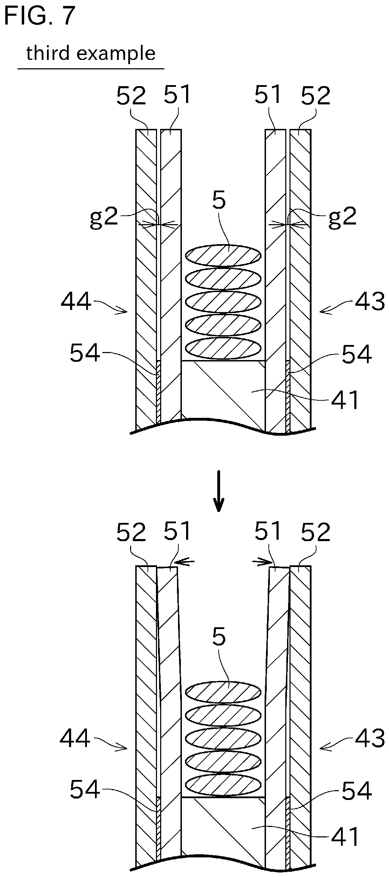

In the example of FIG. 5, the outer diameter of the first flange 51 is substantially equal to the outer diameter of the second flange 52. For example, as a modification shown in FIG. 6, the outer diameter of the second flange 52 can be modified to be larger than the outer diameter of the first flange 51. The first flange 51 located inside is closer to the yarn prepreg 5 than the second flange 52 located outside and is therefore more susceptible to thermal deformation. Even in the case where the first flange 51 is largely deformed, if the outer diameter of the second flange 52 is larger than the outer diameter of the first flange 51, the circumference of the first flange 51 can easily be prevented from being deformed so that it overcomes the second flange 52. The configuration in which the outer diameter of the second flange 52 is larger than the outer diameter of the first flange 51 can be similarly applied to the example in FIG. 4 which is described above and an example in FIG. 7 which will be described below.

As another example of a configuration in which the first flange 51 and the second flange 52 are not bonded together, as shown in FIG. 7, a small gap g2 can be formed between the first flange 51 and the second flange 52. The gap g2 can be achieved, for example, by placing a spacer 54 of an appropriate thickness between the first flange 51 and the second flange 52. In this configuration, as a result of heat from the yarn prepreg being applied to the first flange 51, the first flange 51 is deformed so that it becomes outward in the axial direction as it approaches outward in the radial direction. However, since the first flange 51 and the second flange 52 face each other with a gap g2, even if the above deformation occurs somewhat strongly in the first flange 51, only the outer edge of the first flange 51 in the radial direction contacts the second flange 52. Since the contact area is slight, it is difficult for heat to be conducted from the first flange 51 to the second flange 52. Therefore, heat-induced deformation of the second flange 52 can be significantly reduced.

In this embodiment, the axial length (spacing g1) of the core 41 is about 6 mm and the diameter of the core 41 is about 110 mm. The diameter of the first guide 43 and the second guide 44 (first flange 51 and second flange 52) is about 500 mm. The thickness of the first flange 51 is about 2 mm and the thickness of the second flange 52 is about 3 mm. However, the shape of the reel 40 can be modified in various ways.

As explained above, in this embodiment, the yarn prepreg package 60 is manufactured in the following manner. The yarn prepreg package 60 is formed by winding the yarn prepreg 5 onto the reel 40. The reel 40 includes the first guide 43 and the second guide 44 which are arranged so that the spacing g1 is formed between the first guide 43 and the second guide 44. Each of the first guide 43 and the second guide 44 has the first flange 51 and the second flange 52, the second flange 52 being opaque. The second flange 52 is located on the outside in the axial direction from the first flange 51. The second flange 52 has a higher thermal conductivity than a thermal conductivity of the first flange 51. The yarn prepreg 5 is led between the first guide 43 and the second guide 44 and wound spirally in a single row onto the reel 40.

This allows for good suppression of heat-induced deformation of the first guide 43 and the second guide 44 that guide the yarn prepreg 5, and for stable maintenance of the parallelism of the first guide 43 and the second guide 44. Therefore, it is possible to produce the yarn prepreg package 60 in which the yarn prepreg 5 is neatly wound and to ensure good unwinding of the yarn prepreg 5 from the package.

In the reel 40 of the yarn prepreg package 60 manufactured in this embodiment, the first flange 51 is transparent or translucent. The first flange 51 is exposed outward in the axial direction through the remaining amount check hole 55 formed in a through shape at the second flange 52.

This allows the remaining amount of the yarn prepreg 5 to be easily checked via the remaining amount check hole 55 formed at the second flange 52.

In the reel 40 of the yarn prepreg package 60 manufactured in this embodiment, the thermal expansion of the second flange 52 is lower than the thermal expansion of the first flange 51.

This allows for even better suppression of heat-induced deformation of the first guide 43 and the second guide 44.

In the reel 40 of the yarn prepreg package 60 manufactured in this embodiment, the second flange 52 has higher rigidity than rigidity of the first flange 51.

This allows the second flange 52 to strongly suppress the attempt of the first flange 51 to deform outward in the axial direction due to heat.

In the reel 40 of the yarn prepreg package 60 manufactured in this embodiment, the first flange 51 has a lower relative density than a relative density of the second flange 52.

This allows the reel 40 to be lightweight and easier to transport and otherwise handle.

In the example of FIG. 4, the first flange 51 and the second flange 52 are coupled to each other via the adhesive layer 53.

This allows for a good increase in the mechanical strength of the first guide 43 and the second guide 44.

In the example of FIG. 5, the first flange 51 and the second flange 52 are in contact with each other face to face without being adhered.

This allows deformation of the first flange 51 to be released without being transmitted to the second flange 52. Thus, damage to the first flange 51 and the like can be avoided and the durability of the reel 40 can be well enhanced.

In the example of FIG. 7, the air layer is formed between the first flange 51 and the second flange 52.

This prevents heat from being transferred from the first flange 51 to the second flange 52, which effectively prevents thermal deformation of the second flange 52.

In the example in FIG. 6, the outer diameter of the second flange 52 is larger than the outer diameter of the first flange 51.

This makes it easier to prevent the peripheral edge of the first flange 51 from deforming to overcome the second flange 52 outward in the axial direction, even if the first flange 51 is largely deformed.

The reel 40 of the yarn prepreg package 60 manufactured in this embodiment has the core 41. The yarn prepreg 5 is wound around the outer circumference of the core 41. The first guide 43 and the second guide 44 are removable from the core 41.

This allows easy access to the yarn prepreg 5 wound onto the reel 40. In addition, the reel 40 is easy to maintain.

Next, another example of the yarn prepreg package will be described.

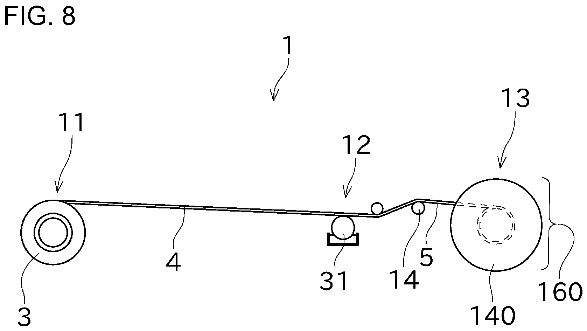

As shown in FIG. 8, a yarn prepreg package 160 of another example can be manufactured by a yarn prepreg manufacturing machine 1 similar to FIG. 1. With respect to FIG. 8, members identical or similar to the aforementioned embodiments are marked with the same symbols in the drawings and may be omitted from the description.

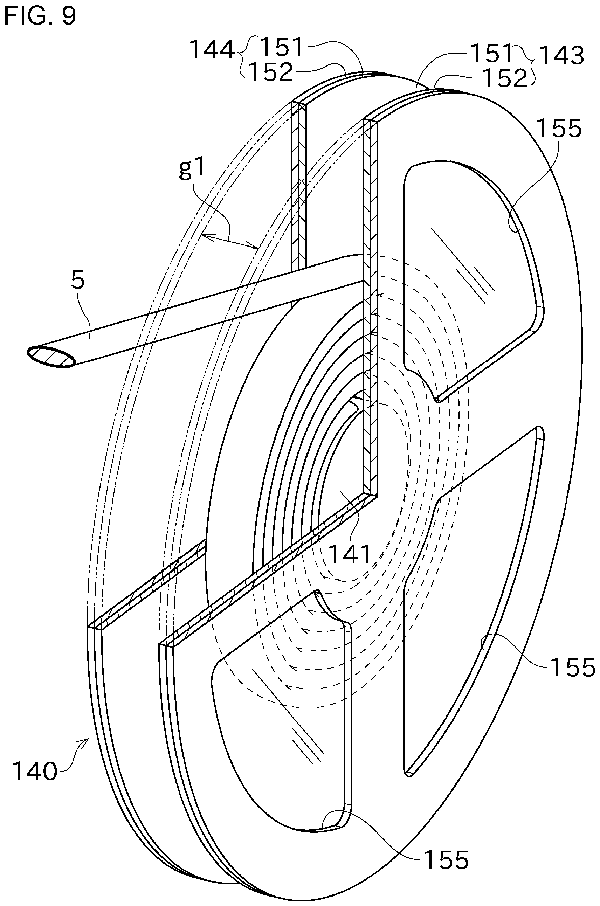

As shown in FIG. 9, the yarn prepreg package 160 has a reel 140. The reel 140 has a core 141, a first guide 143, and a second guide 144.

The core 141 is formed, for example, in a cylindrical shape. The yarn prepreg 5 can be wound onto the outer circumference of the core 141.

The first guide 143 is fixed to one end of the core 141 in the axial direction. The second guide 144 is fixed to one end of the core 141 on the opposite side of the first guide 143 in the axial direction. Each of the first guide 143 and the second guide 144 is formed in a flange shape. The first guide 143 and the second guide 144 guide the yarn prepreg 5 so that the yarn prepreg 5 is wound at an appropriate position on the outer circumference of the core 141. Similar to the reel 40 described in the above embodiment, it is preferred that at least one of the first guide 143 and the second guide 144 can be removable from the core 141.

Similar to the reel 40 described in the above embodiment, a spacing g1 is formed in the axial direction between the first guide 143 and the second guide 144.

The first guide 143 and the second guide 144 are symmetrically configured and substantially similar. Accordingly, the configuration of the first guide 143 will be described below as representative.

The first guide 143 has a first flange (first member) 151 and a second flange (second member) 152.

The first flange 151 is a plate-shaped member formed in the shape of a flange. The thickness direction of the first flange 151 is parallel to the axial direction of the core 141. The first flange 151 is formed by a transparent synthetic resin. The material of the first flange 151 is preferably filler-filled resin, polycarbonate, polytetrafluoroethylene, or polyethylene terephthalate. However, the material of the first flange 151 can also be glass, polyvinyl chloride, or the like.

The second flange 152 is a plate-shaped member formed in the shape of a flange. The thickness direction of the second flange 152 is parallel to the axial direction of the core 141. The second flange 152 is located the outside in the axial direction from the first flange 151. The second flange 152 is arranged parallel to the first flange 51. The second flange 152 is opaque. The material of the second flange 152 is preferably a metal, for example, aluminum. However, the material of the second flange 152 can also be steel, stainless steel, or the like.

The second flange 152 has a lower thermal expansion than a thermal expansion of the first flange 151. In other words, the coefficient of a linear expansion of the second flange 152 is smaller than that of the first flange 151. Furthermore, the second flange 152 has a higher thermal conductivity than a thermal conductivity of the first flange 151, so the temperature gradient as described for the first flange 151 is less likely to occur. As a result, the second flange 152 does not deform as much as the first flange 151.

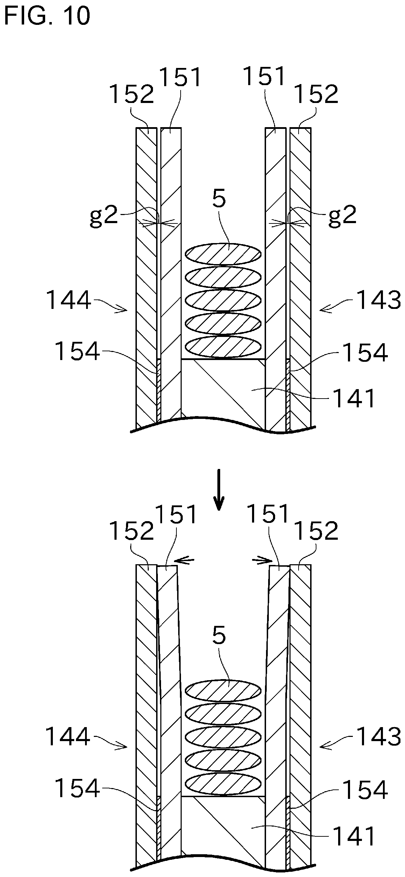

As shown in FIG. 10, a small gap g2 is formed between the first flange 151 and the second flange 152. The gap g2 can be achieved, for example, by placing a spacer 154 of appropriate thickness between the first flange 151 and the second flange 152. In this configuration, as a result of heat from the yarn prepreg being applied to the first flange 151, the first flange 151 is deformed so that it becomes outward in the axial direction as it approaches outward in the radial direction. However, since the first flange 151 and the second flange 152 face each other with a gap g2, even if the above deformation occurs somewhat strongly in the first flange 151, only the outer edge of the first flange 151 in the radial direction contacts the second flange 152. Since the contact area is slight, it is difficult for heat to be conducted from the first flange 151 to the second flange 152. Therefore, heat-induced deformation of the second flange 152 can be significantly reduced.

As explained above, the reel 140 as the example shown in FIGS. 8 through 10 is a reel for winding the yarn prepreg 5. This reel 140 has the first guide 143 and the second guide 144 which are arranged so that the spacing is formed between the first guide 143 and the second guide 144. Each of the first guide 143 and the second guide 144 has the first flange 151 which is transparent and the second flange 152 which is opaque. The second flange 152 is located on the outside from the first flange 151 in the axial direction. The first flange 151 is exposed outward in the axial direction through a remaining amount check hole 155 formed in a through shape at the second flange 152. The air layer is formed in the gap g2 between the first flange 151 and the second flange 152.

This allows good suppression of heat-induced deformation of the first guide 143 and the second guide 144 that guide the yarn prepreg 5, and for stable maintenance of the parallelism of the first guide 143 and the second guide 144. In particular, heat is less likely to be transferred from the first flange 151 to the second flange 152, and heat-induced deformation is less likely to occur in the second flange 152. Therefore, it is possible to produce a yarn prepreg package in which the yarn prepreg 5 is neatly wound and to ensure good unwinding of the yarn prepreg 5 from the package.

In the reel 140 of the above example, the thermal expansion of the second flange 152 is lower than the thermal expansion of the first flange 151.

This allows for even better suppression of heat-induced deformation of the first guide 143 and the second guide 144.

In the reel 140 of the above example, the second flange 152 has more rigidity than rigidity of the first flange 151.

This allows the second flange 152 to strongly suppress the attempt of the first flange 151 to deform outward in the axial direction due to heat.

In the reel 140 of the above example, the first flange 151 has a lower relative density than a relative density of the second flange 152.

This allows the reel 140 to be lightweight and easier to transport and otherwise handle.

The reel 140 of the above example has the core 141 whose outer circumference is wound by the yarn prepreg 5. Each of the first guide 143 and the second guide 144 can be removed from the core 141.

This allows easy access to the yarn prepreg 5 wound onto the reel 140. In addition, the reel 140 is easy to maintain.

While some preferred embodiments of the present invention have been described above, the foregoing configurations may be modified, for example, as follows. The modification can be singly made and any combination of several modifications can be made.

The first flange 51 is not limited to being transparent, and may be configured to be translucent, for example. It is sufficient if the first flange 51 is transparent to the extent that the yarn prepreg 5 wound around the core 41 is visible.

The relative density of the first flange 51 is preferably less than that of the second flange 52, but may be greater than that of the second flange 52.

The layered structure with the first flange 51 which is transparent and the second flange 52 which is opaque may be applied to only one side of the first guide 43 and the second guide 44.

In the case where the layered structure with the first flange 51 which is transparent and the second flange 52 which is opaque is applied to both the first guide 43 and the second guide 44, a hole or notch for checking the remaining amount may be formed only on the second flange 52 on one side.

The first flange 51 may be configured to be opaque.

Instead of the first flange 51, a sheet-like or film-like member may be used.

Between the first guide 43 and the second guide 44, the yarn prepreg 5 may be wound while being traversed with a small stroke with respect to the core 41 of the reel 40. If the traverse width is smaller than the width of the yarn prepreg 5, the yarn prepreg 5 will be wound spirally on the reel 40 in a single row.

Traversing can be achieved, for example, by forming a ring-shaped guide groove on the periphery of a guide roller 14, which is located immediately upstream of the reel 40 shown in FIG. 1 and guides the yarn prepreg 5, and the guide roller 14 reciprocates in a small stroke in the axial direction as it rotates. Instead of the guide roller 14, the reel 40 can move with small strokes in the axial direction. Traversing can also be achieved by forming the guide groove of the guide roller 14 in a spiral shape.

The first flange 151 is not limited to being transparent and may be configured to be translucent, for example. It is sufficient if the first flange 151 is transparent to the extent that the yarn prepreg 5 wound around the core 141 is visible.

The relative density of the first flange 151 is preferably less than that of the second flange 152, but may be greater than that of the second flange 152.

The layered structure with the first flange 151 which is transparent and the second flange 152 which is opaque may be applied to only one side of the first guide 143 and the second guide 144.

In the case where the layered structure with the first flange 151 which is transparent and the second flange 152 which is opaque is applied to both the first guide 143 and the second guide 144, a hole or notch for checking the remaining amount may be formed only on the second flange 152 on one side.

Instead of the first flange 151, a sheet-like or film-like member may be used.

Between the first guide 143 and the second guide 144, the yarn prepreg 5 may be wound while being traversed with a small stroke with respect to the core 141 of the reel 140. If the traverse width is smaller than the width of the yarn prepreg 5, the yarn prepreg 5 will be wound spirally on the reel 140 in a single row.

Traversing can be achieved, for example, by forming a ring-shaped guide groove on the periphery of the guide roller 14, which is located immediately upstream of the reel 140 shown in FIG. 8 and guides the yarn prepreg 5, and the guide roller 14 reciprocates in a small stroke in the axial direction as it rotates. Instead of the guide roller 14, the reel 140 can move with small strokes in the axial direction. Traversing can also be achieved by forming the guide groove of the guide roller 14 in a spiral shape.

In the configuration shown in FIGS. 1 and 8, for example, pitch fiber, PAN fiber, or the like can be used as the carbon fibers pre-wound on the carbon fiber supply bobbin 3. PAN is an abbreviation for polyacrylonitrile.

In the yarn prepreg manufacturing machine 1 shown in FIGS. 1 and 8, carbon fibers are supplied in the carbon fiber supplier 11 from the carbon fiber supply bobbin 3 on which premanufactured carbon fibers are wound. Instead of this, the configuration can be changed to one in which carbon fibers are manufactured and supplied from raw materials in the carbon fiber supplier 11. How the carbon fibers are manufactured is arbitrary, but for example, coal tar could be converted into pitch fibers or acrylonitrile into PAN fibers.

Regarding the resin applier 12, there are various methods of adhering the resin to the carbon fibers. For example, the resin may be impregnated onto the carbon fibers by roll transfer, the resin may be supplied to the carbon fibers by a metering pump, the carbon fibers may be immersed in a resin reservoir in which liquid resin is stored.

The configuration of the yarn prepreg manufacturing machine 1 shown in FIGS. 1 and 8 is an example and may be modified as needed.

### DESCRIPTION OF THE REFERENCE NUMERAL

| | | | |
|---|---|---|---|
| 5 | yarn prepreg | 140 | reel |
| 40 | reel | 143 | guide |
| 43 | guide | 151 | first flange |
| 51 | first flange | 152 | second flange |
| 52 | second flange | 160 | yarn prepreg package |
| 53 | adhesive layer | g1 | spacing |
| 60 | yarn prepreg package | g2 | gap |

## Claims

1. A yarn prepreg package manufacturing method to form a yarn prepreg package in which yarn prepreg is wound onto a reel,
the reel including two guides which are arranged so that a spacing is formed between the two guides,
at least one of the guides including:
a first member; and
a second member which is located on an outside in an axial direction from the first member, is opaque, and is formed in a flange shape,
the second member having a higher thermal conductivity than a thermal conductivity of the first member,
the method comprising:
leading the yarn prepreg between the two guides to wind the yarn prepreg spirally in a single row onto the reel.

2. The yarn prepreg package manufacturing method according to claim 1, wherein
the first member is transparent or translucent, and
the first member is exposed outward in the axial direction through a hole or notch formed in a through shape at the second member.

3. The yarn prepreg package manufacturing method according to claim 1 or 2, wherein a thermal expansion of the second member is lower than a thermal expansion of the first member.

4. The yarn prepreg package manufacturing method according to any one of claims 1 to 3, wherein the second member has higher rigidity than rigidity of the first member.

5. The yarn prepreg package manufacturing method according to any one of claims 1 to 4, wherein the first member has a lower relative density than a relative density of the second member.

6. The yarn prepreg package manufacturing method according to any one of claims 1 to 5, wherein the first member and the second member are coupled to each other via an adhesive layer.

7. The yarn prepreg package manufacturing method according to any one of claims 1 to 6, wherein the first member and the second member are in contact with each other face to face without being adhered.

8. The yarn prepreg package manufacturing method according to any one of claims 1 to 7, wherein an air layer is formed between the first member and the second member.

9. The yarn prepreg package manufacturing method according to any one of claims 1 to 8, wherein an outer diameter of the second member is larger than an outer diameter of the first member.

10. The yarn prepreg package manufacturing method according to any one of claims 1 to 9, wherein
the reel includes a core whose outer circumference is wound by the yarn prepreg, and
at least one of the two guides is removable from the core.

11. A yarn prepreg reel for winding yarn prepreg, comprising
two guides which are arranged so that a spacing is formed between the two guides, wherein
at least one of the guides includes:
a first member which is transparent or translucent; and
a second member which is located on an outside in an axial direction from the first member, is opaque, and is formed in a flange shape,
the first member is exposed outward in the axial direction through a hole or notch formed in a through shape at the second member, and
an air layer is formed between the first member and the second member.

12. The yarn prepreg reel according to claim 11, wherein a thermal expansion of the second member is lower than a thermal expansion of the first member.

13. The yarn prepreg reel according to claim 11 or 12, wherein the second member has higher rigidity than rigidity of the first member.

14. The yarn prepreg reel according to any one of claims 11 to 13, wherein the first member has a lower relative density than a relative density of the second member.

15. The yarn prepreg reel according to any one of claims 11 to 14, further comprising
a core whose outer circumference is wound by the yarn prepreg, wherein
at least one of the two guides is removable from the core.
